Europäisches Patentamt

European Patent Office

Office européen des brevets

(19)

(11) Publication number: **0 196 655**

A1

(12) **EUROPEAN PATENT APPLICATION**

(21) Application number: **86104450.1**

(22) Date of filing: **01.04.86**

(51) Int. Cl.⁴: **G 21 C 7/00**
**G 21 C 3/32**

(30) Priority: **29.03.85 JP 63657/85**

(43) Date of publication of application:
**08.10.86 Bulletin 86/41**

(84) Designated Contracting States:
**DE SE**

(71) Applicant: **HITACHI, LTD.**
**6, Kanda Surugadai 4-chome Chiyoda-ku**
**Tokyo 100(JP)**

(72) Inventor: **Ohashi, Masahisa**
**10-2, Sukegawacho-4-chome**
**Hitachi-shi(JP)**

(72) Inventor: **Hirao, Seizo**
**943-9, Mikawa-3-chome**
**Mito-shi(JP)**

(72) Inventor: **Masuoka, Ryuzo**
**4-23, Osecho-4-chome**
**Hitachi-shi(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Fuel assembly for nuclear reactor.**

(57) Provided are fuel assemblies each having an outer peripheral zone and a central zone surrounded by the former and adapted to be loaded in a reactor core, the fuel rods therein being arrayed in a certain pattern such that the fuel rods (1) disposed in the outer peripheral zone have a smaller fuel volume than that of those (2) disposed in the central zone. Such a fuel assembly offers a suitable distribution of local power output as well as a high degree of burn-up.

FIG. I

EP 0 196 655 A1

## FUEL ASSEMBLY FOR NUCLEAR REACTOR

BACKGROUND OF THE INVENTION:

The present invention relates to a fuel assembly adapted to be loaded in the core of a nuclear reactor.

In a reactor core, a multiplicity of fuel assemblies are arrayed in a predetermined pattern. Since moderators such as $D_2O$ and $H_2O$ are filled in the space between adjacent fuel assemblies, the density of neutrons in the vicinity of the outer peripheral zone of each fuel assembly is high, so that the local power output of each fuel assembly is high in the outer peripheral zone and is considerably low in the central zone thereof.

In order to equalize the local power output, a conventional fuel assembly is arranged such that fuel rodes with a high fuel enrichment factor are disposed in a zone having a low thermal neutron flux density, while fuel rods with a low fuel enrichment factor are disposed in a zone having a high thermal neutron flux density.

A recent tendency of light water reactors and heavy water reactors is to prolong the operating cycle from twelve months to 15 months by improving the capacity utilization ratio of the reactor. To this end, it is necessary to increase enrichment. Consequently, the distribution of density of fissile material contained in the reactor core becomes considerably uneven, and the thermal neutron flux density also varies locally in the reactor core and fuel assemblies. As a method of **0196655** equalizing the local power output in the core and to minimize the maximum value of local power in the core as practically as possible, a method is generally taken in which the enrichment factor of fuel disposed in a zone having a high thermal neutron flux density is set such as to be lower than that of fuel disposed in a zone having a low thermal neutron flux density, thereby equalizing local variations in the thermal neutron flux density. As described above, in order to equalize the distribution of local power in fuel assemblies, a method is taken whereby the enrichment of fuel rods disposed in the outer peripheral zone having a high thermal neutron flux density is decreased, while the enrichment of fuel rods disposed in the central zone is increased.

However, if the fuel enrichment factor is increased to prolong the operating cycle, variations in the thermal neutron flux density becomes noticeable, and the thermal neutron flux becomes very high in the outer peripheral zone of each fuel assembly, while it becomes extremely low in the central zone. Namely, the local power output in the outer peripheral zone of each fuel assembly becomes mazimum, and if the fuel enrichment factor is increased, the maximum local power output also increases. In order to prevent the maximum local power output from increasing, it becomes necessary to set the difference between the enrichment of fuel disposed in the outer peripheral zone and that of fuel disposed in the central zone to a very large level. For instance, in fuel assemblies for a nuclear reactor operated with a long-term operating cycle of one year or longer, an attempt is made to equalize the power output per fuel rod of a fuel assembly by reducing the enrichment of fuel rods disposed in the outer peripheral zone to approximately one half of that disposed in the central zone.

Nevertheless, since there is the problem that it is necessary to inhibit the thermal stress of fuel rods with respect to cladding pipes, it is impossible to unlimitedly increase the maximum local power output per fuel rod. Hence, the enrichment per fuel rod cannot be set to an extremely high level. As a result, to equalize the distribution of power output, fuel rods whose fuel enrichment is average or below are disposed in the zone having a high neutron flux density that contributes substantially to nuclear fission. Consequently, it becomes impossible to effectively burn up the fissile material, which is the fuel.

To overcome the aforementioned problems, a fuel assembly for a light water reactor has been proposed in which the power output per fuel rod is reduced by making the diameter of fuel rods small so as to reduce the temperature of fuel, and, as the same time, a greater volume of fissile material is disposed in the zone having a high thermal neutron flux density. If the diameter of fuel rods is simply made small, however, the fabrication of fuel assemblies becomes complicated, since the number

0196655

of fuel rods increases, and also since the diameter of fuel rods becomes small. In addition, the volumetric share of materials other than fissile material such as cladding pipes increases, thereby giving rise to such problems as an increase in the volume of wasteful absorbents for neutrons.

In addition, the specification of Japanese Patent Unexamined Publication No. 40187/1978 discloses an arrangement in which fuel rods are arrayed in the shape of a triangular or square lattice inside each pressure tube of a pressure tube type reactor, and small-diameter fuel rods are disposed in nonuniform and relatively large spaces between the inner surfaces of pressure tubes and the array of fuel rods in the outer peripheral layer. This arrangement disclosed in the specification of Japanese Patent Unexamined Publication No. 40187/1978 is an attempt to make uniform the interval between the array of fuel rods and the inner wall of pressure tubes so as to set the flow rate of light water flowing therein to a fixed level. With this arrangement, however, two types of fuel rods comprising a set of large-diameter fuel rods and another set of small-diameter fuel rods are mixed in the zone having a high neutron flux density, i.e., the outer peripheral zone. In such an arrangement, it is difficult to equalize the distribution of local power output.

Furthermore, in the specification of U. S. Patent No. 3132076, a fuel assembly for a boiling water reactor for the purpose of equalizing the distribution of power output is proposed. This fuel assembly is arranged such that slit-like channels for light water are provided between the arrays of fuel rods, each array being disposed in the shape of a square lattice, and the ratio between light water and fuel is made large so as to equalize the distribution of power output. According to this method, it becomes possible to attain the equalization of power output to some extent, but the amount of fuel decreases by the portion in which light water channels are provided. However, no consideration is given in that specification as to how the output per fuel rod can be increased by taking that situation into account.

Consideration will be given hereinafter of the linear heat rating per unit length of a fuel rod by paying attention to individual fuel rods of each fuel assembly.

Assuming that the zone having a high thermal neutron flux density contributing to nuclear fission is H, and that the zone having a low thermal neutron flux density is L, the linear heat rating of each fuel rod in the respective zones can be given by the following formulae (1) and (2):

$$P(H) = N(H) \times \sigma_f(L) \times \phi(H) \times V \quad \ldots\ldots \quad (1)$$
$$P(L) = N(L) \times \sigma_f(L) \times \phi(L) \times V \quad \ldots\ldots \quad (2)$$

Where P(H): linear heat rating (W/cm) of fuel in a fuel

- 6 -

0196655

rod in the zone of a high neutron flux density H

$N(H)$: density of fissile material $(pc/cm^3)$ in a fuel rod in the zone of a high neutron flux density H

$\sigma_f(H)$: microscopic fission cross section $(cm^2)$ of in the zone of a high neutron flux density H

$\phi(H)$: neutron flux density (thermal neutron/$cm^2$·sec) in the zone of a high neutron flux density H

$P(L)$: linear heat rating (W/cm) of fuel in a fuel rod in the zone of a low neutron flux density H

$N(L)$: density of fissile material $(pc/cm^3)$ in a fuel rod in the zone of a low neutron flux density L

$\sigma_f(L)$: microscopic fission cross section $(cm^2)$ of in the zone of a low neutron flux density L

$\phi(L)$: neutron flux density (thermal neutron/$cm^2$·sec) in the zone of a low neutron flux density L

$V$: fuel volume $(cm^3)$

From the premise, it follows that $\phi(H) > \phi(L)$.

With respect to the power output of fuel rods, the maximum power output should desirably be low. For this reason, it is necessary to decrease a power peaking

- 7 -

0196655

factor so that the power output of fuel rods is brought close to the average power output. This means that P (H) and p (L) in Formulae (1) and (2) should be brought as close to each other as possible.

If the power output of fuel rods in the zone of a high thermal neutron flux density and the zone of a low thermal neutron flux density is assumed to be $P_0$ (H) and $P_0$ (H), respectively, a method has conventionally been adopted to change an enrichment factor N in response to the magnitude of the thermal neutron flux so that $P_0$ (H) $\simeq P_0$ (L). In other words,

$$P_0 \ (H) = N_0 \ (H) \ x \ \sigma_{f0} \ (H) \ x \ \phi_0 \ (H) \ x \ V_0 \quad .. \ (3)$$
$$P_0 \ (L) = N_0 \ (L) \ x \ \sigma_{f0} \ (L) \ x \ \phi_0 \ (L) \ x \ V_0 \quad .. \ (4)$$
$$N_0 \ (H) < N_0 \ (L) \ ........................ \ (5)$$
$$\phi_0 \ (H) > \phi_0 \ (L) \ (shown \ in \ Fig. \ 7) \ ........ \ (6)$$

In view of the foregoing reason, fuel of low-density fissile material, i.e., fuel of a low enrichment factor, is disposed in the zone of a high thermal neutron flux density. Thus, as described earlier, it has been very difficult to improve the degree of burn-up without increasing the maximum local power of the fuel rods of fuel assemblies and to equalize the local power of fuel assemblies.

A general object of the present invention is to provide a fuel assembly which is capable of attaining a high degree of burn-up without accompanying an increase in the maximum local power and of equalizing the distribution of local output.

According to the present invention, there is provided a fuel assembly in which the fuel volume V of a fuel rod is adjusted so that $P(H) \fallingdotseq P(L)$ where $P(H)$ is the fuel power density of a fuel rod in the zone of a high neutron flux density, and $P(L)$ is the fuel output density of a fuel rod in the zone of a low neutron flux density.

In other words, if, in

$$P(H) = N(H) \times \sigma_f(H) \times \phi(H) \times V(H) \quad \ldots \quad (7)$$

and

$$P(L) = N(L) \times \sigma_f(L) \times \phi(L) \times V(L) \quad \ldots \quad (8)$$

it is assumed that

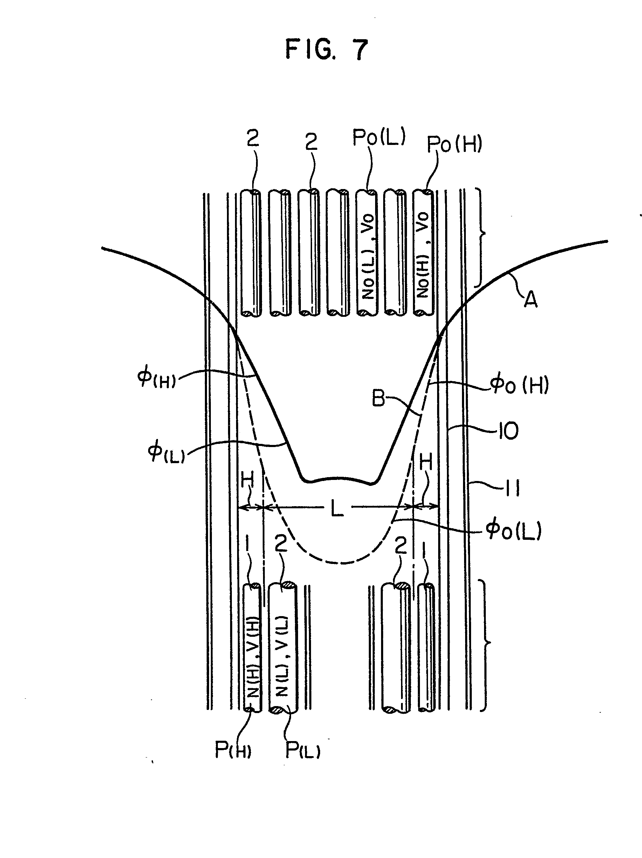

$$N(H) = N(L) \quad \ldots\ldots\ldots\ldots\ldots\ldots\ldots\ldots\ldots\ldots\ldots \quad (9)$$
$$\phi(H) > \phi(L) \text{ (shown in Fig. 7)} \quad \ldots\ldots\ldots \quad (10)$$
$$V(H) < V(L) \text{ (shown in Fig. 7)} \quad \ldots\ldots\ldots \quad (11)$$

Then, it becomes possible to bring the values of $P(H)$ and $P(L)$ close to each other.

Specifically, the present invention provides a fuel assembly for a nuclear reactor, adapted to be loaded in a reactor core, wherein a plurality of fuel rods are disposed in a predetermined pattern in the cross-sectional direction of the fuel assembly, the fuel rods including those that are arrayed in the outer peripheral zone of the fuel assembly, those that are arrayed in the intermediate zone thereof, and those that are arrayed in the central zone thereof, the fuel rods having a substantially fixed factor of fuel enrichment, and each fuel rod arrayed in the outer peripheral zone has a fuel volume smaller than that of each fuel rod arrayed in the intermediate zone and the central zone.

Furthermore, according to the arrangement of an embodiment of the present invention, there is provided a fuel assembly for a nuclear reactor, adapted to be loaded in a reactor core, wherein a plurality of fuel rods are disposed in a predetermined pattern in the cross-sectional direction of the fuel assembly, the fuel rods including those that are arrayed in the outer peripheral zone of the fuel assembly, those that are arrayed in the intermediate zone thereof, and those that are arrayed in the central zone thereof, the fuel rods having a substantially fixed factor of fuel enrichment, and each fuel rod arrayed in the outer peripheral zone having a diameter smaller than that of each fuel rod arrayed in the intermediate zone and the central zone.

The above and other advantages of the invention will become more apparent in the following description and the accompanying drawings.

BRIEF DESCRIPTION OF THE DRAWINGS:                              0196655

Fig. 1 is a cross-sectional view of a fuel assembly for a pressure tube type reactor according to an embodiment of the present invention;

Fig. 2 is a cross-sectional view of a conventional fuel assembly for a pressure tube type reactor;

Fig. 3 is a cross-sectional view of a fuel assembly for a pressure tube type reactor according to another embodiment of the present invention;

Fig. 4 is an cross-sectional view taken along the axis of the assembly shown in Fig. 3;

Fig. 5 is a cross-sectional view of a fuel assembly for a boiling light water reactor embodying the present invention;

Fig. 6 is a cross-sectional view of a fuel assembly for a pressurized light water reactor embodying the present invention; and

Fig. 7 is a diagram illustrating the distribution of neutron flux density of each array of fuel in a conventional example and the present invention.

DESCRIPTION OF THE PREFERRED EMBODIMENTS:

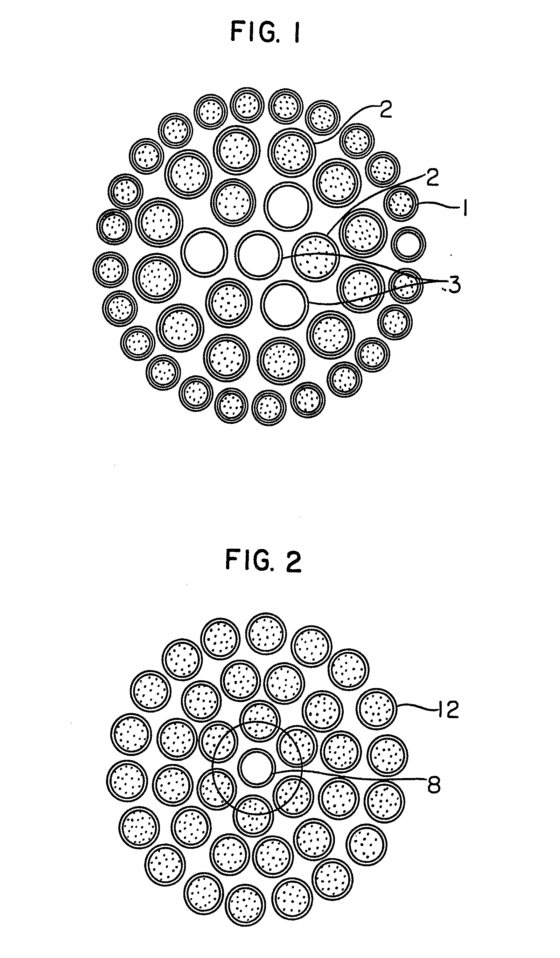

Fig. 1 is a cross-sectional view of a fuel assembly for a pressure tube type reactor according to an embodiment of the present invention. The fuel assembly shown in Fig. 1 is adapted to be loaded in a pressure tube having an inner diameter of approximately 120 mm and the details of its construction is shown in Table 1. In other words, 15 large-diameter fuel rods 2 are arrayed in the intermediate and central zones, while 24 small-diameter fuel rods 2 are arrayed in the outer peripheral zone in this embodiment. The large-diameter fuel rods 2 disposed in the intermediate and central zones have an outer diameter of approximately 15.7 mm, and about 13.6 mm-diameter fuel pellets are loaded therein, respectively.

Table 1

| Fuel layer | No. of fuel rods | Diameter of fuel pellets (mm) | Outer diameter of clad pipe (mm) | Weight of fissile material |
|---|---|---|---|---|
| Central zone | 3 | 13.6 | 15.7 | 0.3 wt.% $^{235}U$ (depleted uranium) |
| Intermediate zone | 12 | 13.6 | 15.7 | 3.0 wt.% $P_u(f_{ia})$ ($P_u$MOS)* |
| Outer peripheral zone | 24 | 9.6 | 11.2 | 3.0 wt.% $P_u(f_{ia})$ ($P_u$MOS)* |
| Total fuel | 39 | - | -. | 0.62 wt.% $^{235}U$ + 2.4 wt.% $P_u(f_{ia})$ |

* Plutonium is mixed in natural uranium oxides.

(However, it is also possible to use depleted uranium.)

In addition, four central support rods 3 for supporting fuel spacers are disposed in the central portion of the fuel assembly. Small-diameter fuel rods 1 in the outer peripheral zone have an approximately 11.2 mm outer diameter, and fuel pellets having an outer diameter of about 9.6 mm are loaded therein, respectively. The overall length of the fuel pellet is about 3,700 mm, and if the electric power of a nuclear reactor is assumed to be 600,000 kW, the number of pressure tubes required is about 650. As a coolant, light water or heavy water is employed. The fuel assembly shown in Fig. 1 includes fuel rods, central support rods, fuel spacers for supporting fuel rods that are not shown, and upper and lower templates. The central support rods play the role of allowing the coolant to flow through a flow section, and the coolant flows slowly through the inside of the supporting rods. According to the embodiment shown in Fig. 1, the number of large-diameter fuel rods is 15. To adjust the weight of fuel and equalize the output distribution, several fuel rods among the fuel rods disposed in the intermediate and central zones may also be made into coolant rods in which the coolant flows slowly without fuel pellets loaded therein.

As fuel for the fuel assembly shown in Fig. 1, it is possible to use slightly enriched uranium oxide fuel, or a fuel mixture of uranium oxide and plutonium oxide fuel. In the embodiment shown in Fig. 1, fuel material which is enhanced with 3.0 wt% fissile plutonium

0196655

added in the form of plutonium oxide to natural uranium oxide is employed for the large-diameter fuel rods 2. As for the three fuel rods in the central zone, depleted uranium fuel is used. This 3.0 wt% can be expressed by the following formula:

$$3.0 \text{ wt\%} = \frac{^{239}P_u + ^{241}P_u}{^{235}U + ^{238}U + ^{239}P_u + ^{240}P_u + ^{241}P_u + ^{242}P_u}$$

(wt% of fissile plutonium)

Fig. 2 shows a conventional fuel assembly in which fuel rods have the same diameter as those of the large-diameter fuel rods of the fuel assembly of this embodiment, and the details of construction of the conventional fuel assembly are shown in Table 2 for the sake of comparison.

Table 2

| Fuel layer | No. of fuel rods | Diameter of fuel pellets (mm) | Outer diameter of clad pipe (mm) | Weight of fissile material |
|---|---|---|---|---|
| Central zone | 6 | 13 | 15 | 3.6 wt.% $P_u(f_{ia})$ $(P_u MOS)$* |
| Inter-mediate zone | 12 | 13 | 15 | 3.6 wt.% $P_u(f_{ia})$ $(P_u MOS)$* |
| Outer poripheral zone | 18 | 13 | 15 | 1.2 wt.% $P_u(f_{ia})$ $(P_u MOS)$* |
| Total fuel | 36 | - | - | 0.7 wt.% $^{235}U$ + 2.4 wt.% $P_u(f_{ia})$ |

* ... Plutonium is mixed in natural uranium oxides.

Fig. 2 is a conventional fuel assembly for a pressure tube type reactor, which is arranged such that 36 fuel rods having the same diameter are bundled together. One support rod 8 for supporting fuel rods by means of fuel spacers is disposed in the central portion of the fuel assembly. A comparison of characteristics between the embodiment of the present invention shown in Fig. 1 and the conventional fuel shown in Fig. 2 is given in Table 3 below.

Table 3

| Item | Fuel | Fig. 1 (Embodiment of this invention) | Fig. 2 (Conventional fuel) |
|---|---|---|---|
| Dia of fuel rod (mm) | Central and intermediate zones | 15.7 mm | approx. 15 mm |
| | Outer peripheral zone | 11.2 mm | |
| Weight of fuel per assembly (effective length: 3,700 mm) (kg) | | approx. 170 kg | approx. 170 kg |
| Weight of fissile material per assembly (kg) | $^{235}U$ | approx. 0.9 kg | approx. 1.0 kg |
| | $P_u(f_{ia})$ | approx. 3.6 kg | approx. 3.5 kg |
| Weight percent of fissile material (wt%) | $^{235}U$ | approx. 0.62 wt% | approx. 0.7 wt% |
| | $P_u(f_{ia})$ | approx. 2.4 wt% | approx. 2.4 wt% |
| Burn-up degree (MWd/t) | | approx. 38000 MWd/t | approx. 30000 MWd/t |
| Local power peaking factor | | approx. 1.09 (fuel in outer peripheral zone) | approx. 1.13 (fuel in outer peripheral zone) |
| Maximum linear heat rating (W/cm) | | approx. 430 W/cm | approx. 490 W/cm |

As shown above, in the case of the fuel assembly according to the embodiment of the present invention shown in Fig. 1, in which the plutonium enhancement is set such as to be identical with that of the conventional fuel, the weight of uranium 235 was found to be slightly small, but the burn-up degree was approximately 38,000 MWd/t. Thus, it can be seen that the fuel assembly of this embodiment is capable of increasing the burn-up degree by about 8000 MWd/t as compared with approximately 30,000 MWd for the conventional fuel. The local power peaking factor in the embodiment shown in Fig. 1 was about 1.09. With respect to the maximum linear heat rating, in a case where 650 pressure tubes were employed and the two types of fuel were used for a reactor generating a thermal output of 1,950 MW, the maximum linear heat rating of the conventional fuel shown in Fig. 2 was 490 W/cm, whereas, in the case of the embodiment of the present invention shown in Fig. 1, the maximum linear heat rating decreased to approximately 430 W/cm, which was attributable to an increase in the number of fuel rods per fuel assembly to 39 as well as the advantage that the aforementioned local were peaking factor was substantially reduced to approximately 430 W/cm.

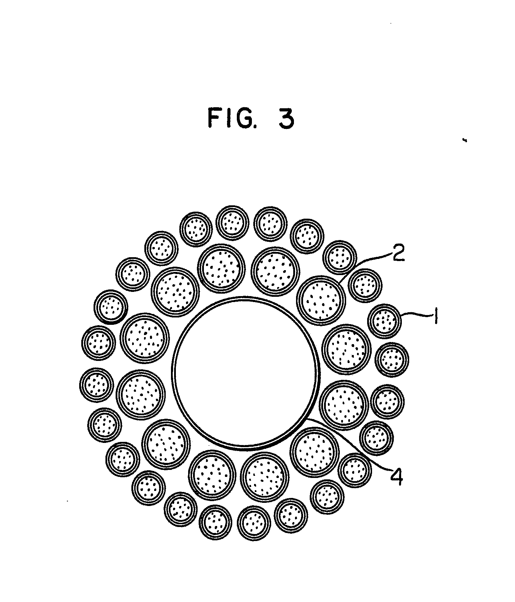

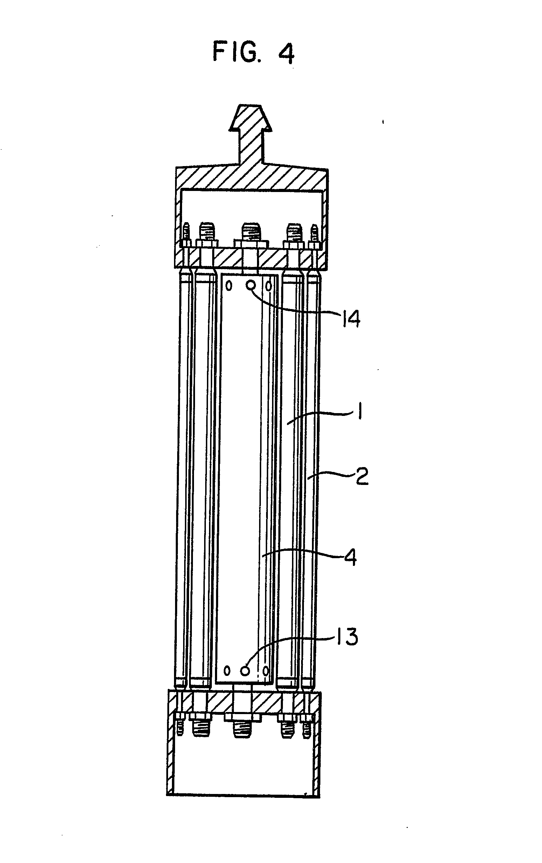

Referring next to Figs. 3 and 4, description of another embodiment of the present invention will be made hereinafter.

Fig. 3 is a cross-sectional view of a fuel assembly according to another embodiment of the present invention.

The fuel assembly shown in Fig. 3 is adapted to be loaded in a pressure tube having an inner diameter of approximately 120 mm, and the details of its structure are shown in Table 4. As for fuel rods, 12 large-diameter fuel rods 2 are employed for the central zone, and 24 small-diameter fuel rods 1, for the outer peripheral zone.

Table 4

| Fuel layer | No. of fuel rods | Diameter of fuel pellets (mm) | Outer diameter of clad pipe (mm) | Weight of fissile material |
|---|---|---|---|---|
| Central zone | 12 | 14.2 | 16.5 | 2.8 wt.% $P_u(f_{ia})$ ($P_u$MOS)* |
| Outer peripheral zone | 24 | 10.0 | 12.0 | 2.8 wt.% $P_u(f_{ia})$ ($P_u$MOS)* |
| Total fuel | 36 | - | - | 0.7 wt.% $^{235}U$ + 2.8 wt.% $P_u(f_{ia})$ |

In addition, further four large-diameter circular tubes 4 are disposed in the central zone. The cladding pipes of these fuel rods and the central circular pipes 4 are all made of a zirconium alloy. The large-diameter fuel rods 2 in the central zone have an outer diameter of approximately 16.5 mm, and fuel pellets having an outer diameter of approximately 14.2 mm are loaded in them. The 24 small-diameter fuel rods 1 in the outer peripheral zone have an outer diameter of approximately 12 mm, and fuel pellets having an outer diameter of approximately 10 mm are loaded in them.

The fuel material and coolant employed in the fuel assembly shown in Fig. 3 are the same as those employed in the embodiment shown in Fig. 1. In the embodiment shown in Fig. 3, fuel material is used which is enhanced with about 2.78 wt% fissile plutonium added in the form of plutonium oxide to natural uranium oxide fuel.

With respect to the coolant flowing in the central circular tube 4 shown in Fig. 3, its flow rate is held to a small level in such a manner that a pressure loss does not become high although the coolant is allowed to flow. Fig. 4 illustrates the longitudinal configuration of the fuel assembly shown in Fig. 3. The fuel assembly is arranged such that small transverse holes 13, 14 serving as inlets and outlets for the coolant are provided in the upper and lower portions of the central circular tube 4 in Fig. 4.

0196655

A comparison between the fuel of the embodiment of the present invention shown in Fig. 3 and the conventional fuel shown in Fig. 2 is given in Table 5 below.

Table 5

| Item ╲ Fuel | | Fig. 3 (Embodiment of this invention) | Fig. 2 (conventional fuel) |
|---|---|---|---|
| Dia. of fuel rod (mm) | Central zone | 16.5 mm | approx. 15 mm |
| | Outer peripheral zone | 12.0 mm | |
| Weight of fuel per assembly (effective length: 4,000 mm) (kg) | | approx. 155 kg | approx. 180 kg |
| Weight of fissile material per assembly (kg) | $^{235}U$ | approx. 0.95 kg | approx. 1.1 kg |
| | $P_u(f_{ia})$ | approx. 3.8 kg | approx. 3.8 kg |
| Weight percent of fissile material (wt%) | $^{235}U$ | approx. 0.7 wt% | approx. 0.7 wt% |
| | $P_u(f_{ia})$ | approx. 2.8 wt% | approx. 2.4 wt% |
| Burn-up degree (MWd/t) | | approx. 41,000 MWd/t | approx. 30,000 MWd/t |
| Local power peaking factor | | 1.07 (central zone) 0.95 (outer peripheral zone) | 1.13 (our peripheral zone) |

Table 5 (Cont'd)

| Max. linear heat density (W/cm) | approx. 460 W/cm (central zone) | approx. 490 W/cm (outer peripheral zone) |
|---|---|---|
| Max. thermal flux $(W/cm^2)$ | approx. 109 $W/cm^2$ (outer peripheral zone) | approx. 109$W/cm^2$ (outer peripheral zone) |

As shown in Table 5, in the case of the fuel of the embodiment of the present invention shown in Fig. 3, the weight of uranium 235 per fuel assembly was slightly small as compared with the conventional fuel. Even if the weight of fissile plutonium is made identical, its burn-up degree was approximately 41,000 MWd/t, and it hence becomes possible to improve the burn-up degree by about 11,000 MWd/t (about 37%) as compared with about 30,000 MWd/t for the conventional fuel. In the case of the conventional fuel, it has been necessary to replace 120 fuel assemblies per year in a nuclear power plant generating an electric power of 600,000 kW, whereas, in the case where the fuel of the embodiment shown in Fig. 3 is used, only 100 fuel assemblies may be replaced. This translates into a reduction of 20 fuel assemblies per year, which means that 17% fuel can be conserved. In addition, during the initial stage of burn-up according to the embodiment shown in Fig. 3, the local power peaking occurred in the fuel in the central zone, and its factor was approximately 1.07. With the conventional fuel, the local power peaking occurred in the outer peripheral zone, and its factor is approximately 1.13. Consequently, in the case of the conventional fuel, the maximum thermal flux occurred in the outer peripheral zone during the initial stage of burn-up and its value was approximately 109 $W/cm_2$. On the other hand, in the case of the embodiment of the present invention shown in Fig. 3, the maximum thermal flux occurred in the outer peripheral zone during the initial stage of burn-up, and, despite the fact that small-diameter fuel rods were employed in that zone, the value of the maximum thermal flux was approximately 109 $W/cm^2$, which is identical with that of the conventional fuel. In addition, in the case of the conventional fuel, the maximum linear heat rating occurred in the outer peripheral zone and was approximately 490 W/cm, whereas, in the case of the embodiment shown in Fig. 3, the maximum linear heat rating occurred in the central zone and was about 460 W/cm, representing a reduction of about 6%.

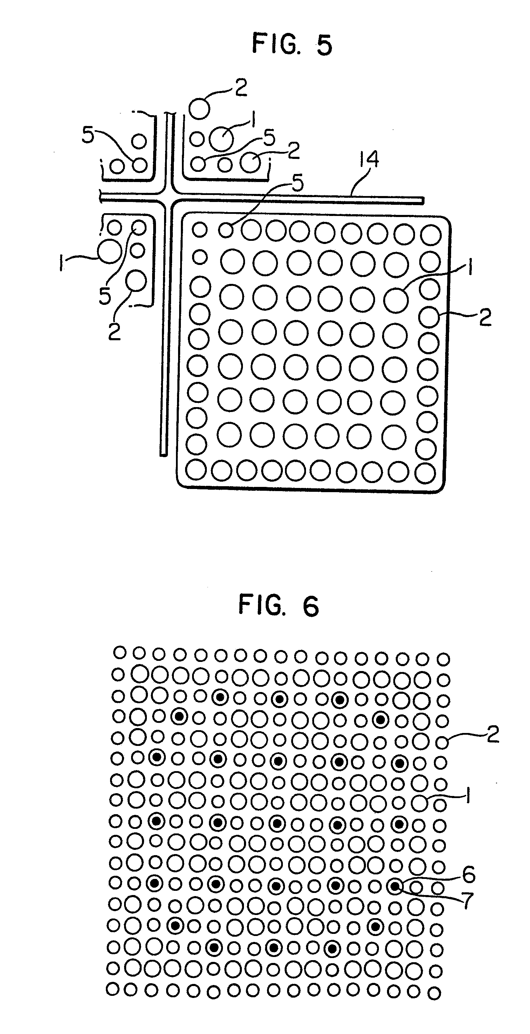

Referring now to Fig. 5, description will be made of an application of the present invention to a light water reactor.

Fig. 5 is a cross-sectional view of a fuel assembly in which the present invention is applied to a boiling light water reactor. The fuel assembly shown in this drawing employes 36 small-diameter fuel rods 1 in the outer peripheral zone, 36 large-diameter fuel rods 2 in the central and intermediate zones, and three fuel rods 5 disposed adjacent to a control rod and having the smallest diameter. Each of the small-diameter fuel rods 1 has an outer diameter of about 10 mm, and fuel pellets having a diameter of about 8.1 mm are loaded in them. Reference numeral 14 denotes a cross-shaped control rod. Each of the large-diameter fuel rods 2 has an outer diameter of about 13.2 mm, and fuel pellets having a diameter of about 11.3 mm are loaded in them. Each of

0196655

the three fuel rods having the smallest diameter has an outer diameter of about 9 mm, and fuel pellets having a diameter of about 7.4 mm are loaded in them. Although, in Fig. 5, fuel rods of three types of outer diameter are used, it is possible to increase or decrease the number of types of the outer diameter depending on the rate of variations in the thermal neutron flux density and the need for equalizing the output distribution. Furthermore, it is also possible to make a part of the fuel rod a water rod as in the case of fuel for a conventional boiling water reactor.

A comparison between the fuel assembly shown in Fig. 5 and the conventional fuel for a boiling light water reactor is shown in Table 6 below.

Table 6

| Item / Fuel | | Fig. 5 (Embodiment of the invention applied to BWR) | Conventional fuel for BWR |
|---|---|---|---|
| Dia of fuel rod (mm) | adjacent to control rod | approx. 9 mm (3 pcs.) | approx. 12.5 mm |
| | outer peripheral zone | approx. 10 mm (33 pcs.) | |
| | central and intermediate zones | approx. 13.2 mm (36 pcs.) | |
| Weight of fuel per assembly (kg) | | approx. 200 kg | approx. 200 kg |
| Weight of fissile material per assembly $^{235}$U (kg) | | approx. 4.8 kg | approx. 4.8 kg |
| Weight percent of $^{235}$U (wt%) | | 2.7 wt% (identical) | 2.7 wt% (average) |
| No. of types of enrichment of $^{235}$U | | 1 | 4 |
| Burn-up degree (MWd/t) | | 32000 MWd/t | 29500 MWd/t |

0196655

As shown in Table 6, in the case of the fuel in the embodiment shown in Fig. 5, although the weight of fuel and the weight of uranium 235 are identical as those of the fuel for a conventional boiling light water reactor, the burn-up degree became about 32,000 MWd/t in contrast to about 29,500 MWd for the conventional fuel. Thus, it can be seen that the burn-up degree can be improved by 2,500 MWd/t (i.e., 10%).

Although only one type of uranium enrichment factor was adopted in the embodiment shown in Fig. 5, it is also possible to change the enrichment factor in the radial or axial direction of the fuel assembly so as to effect a further equalization of the output distribution.

Referring now to Fig. 6, description will be made of an application of the present invention to a pressurized light water reactor.

Fig. 6 is a cross-sectional view of a fuel assembly in which the present invention is applied to a pressurized light water reactor. The fuel shown in Fig. 6 is pressurezed water-type fuel employing 17 by 17 rows of fuel rods, in which small-diameter fuel rods 1 are employed for 66 fuel rods in the outer peripheral zone and 100 fuel rods adjacent to control rods 7, while large-diameter fuel rods 2 are employed for the remaining 98 fuel rods. In addition, this fuel assembly has 25 control rod guide pipes 6. The control rod guide pipes 6 are adapted such that the control rods 7 are capable being

- 30 -

driven therein. Each of the small-diameter fuel rods 0196655 2 has an outer diameter of about 9.4 mm, and fuel pellets having a diameter of about 8.0 mm are loaded therein. Each of the large-diameter fuel rods 2 has an outer diameter of ablut 10.6 mm, and fuel pellets having a diameter of about 9.3 mm are loaded therein.

According to the embodiment shown in Fig. 6, it becomes possible to equalize the distribution of the local output inside the fuel assembly, and is also possible to reduce the maximum linear heat rating. In addition, since the diameter of the fuel rods adjacent to the control rods is made small, the linear heat rating in their surroundings declines, and it becomes possible to improve the soundness of fuel with respect to the driving of control rods during operation.

The advantages of the present invention will be described below by taking a pressure tube type reactor as an illustration.

Fig. 7 is a cross-sectional view taken along the axis of a pressure tube 10 in the calandria tube 11 of a pressure tube type reactor. To facilitate comparison, an array of conventional fuel rods 2 having the same diameter is shown in the upper portion of the drawing, while an array of fuel rods 1, 2 of the present invention is shown in the lower portion thereof. In the central portion of the drawing, the distribution of neutron flux density in the case where the array of the conventional fuel is used is shown by a dotted line B, while the

0196655

distribution of neutron flux density in the case where the array of the fuel of the present invention is used is shown by a solid line A.

As can be appreciated from comparison between the solid line A and the dotted line B in Fig. 7, as for the fuel assembly arranged according to the present invention, the decline of the thermal neutron flux density thereof takes place gradually from the outer peripheral zone to the central zone. In addition, there is no need for the enrichment factor of fuel rods to be decreased in the outer peripheral zone having a high neutral flux density. Namely, it becomes possible to dispose a greater volume of fissile material in the zone having a high neutron flux density, thereby allowing the burn-up degree of the fuel assembly to be improved without increasing the local power output.

WHAT IS CLAIMED IS:

1.      A fuel assembly for a nuclear ractor, adapted to be loaded in a reactor core and having a longitudinal axis with an outer peripheral zone surrounding said longitudinal axis and a central zone surrounded by said outer peripheral zone, said fuel assembly comprising a plurality of fuel rods extending along said longigudinal axis each of which has a predetermined fuel volume, said plurality of fuel rods including fuel rods that are arrayed in said outer peripheral zone of said fuel assembly and fuel rods that are arrayed in said central zone, wherein the fuel volume of each of said fuel rods disposed in said outer peripheral zone is smaller than that of each of said fuel rods disposed in said central zone.

2.      A fuel assembly for a nuclear reactor, adapted to be loaded in a reactor core and having a longitudinal axis with an outer peripheral zone surrounding said longitudinal axis and a central zone surrounded by said outer peripheral zone, said fuel assembly comprising a plurality of fuel rods extending along said longitudinal axis each of which has a predetermined diameter, said plurality of fuel rods including fuel rods that are arrayed in said outer peripheral zone of said fuel assembly and fuel rods that are arrayed in said central zone, wherein the diameter of each of said fuel rods disposed in said outer peripheral zone is smaller than that of each of said fuel rods disposed in said central zone.

3.      A fuel assembly for a nuclear reactor according to claim 2, wherein said fuel assembly has a plurality of central support rods disposed in said central zone.

4.      A fuel assembly for a nuclear reactor according to claim 2, wherein said fuel assembly for a reactor has a hollow cylinder with a diameter larger than that of said fuel rods disposed in said central zone as well as a port serving as an entrance and exit for a coolant at the upper and lower portions of said cylinder.

5.      A fuel assembly for a boiling water reactor, adapted to be loaded in the core of said reactor, said fuel assembly being divided into a plurality of groups surrounding one cross-shaped control rod and having a longitudinal axis with an outer peripheral zone surrounding said longitudinal axis and a central zone surrounded by said outer peripheral zone, said fuel assembly comprising a plurality of fuel rods extending along said longitudinal axis each of which has a predetermined diameter, said plurality of fuel rods including fuel rods that are arrayed in said outer peripheral zone of said fuel assembly and fuel rods that are arrayed in said central zone, wherein the diameter of each of said fuel rods disposed in said outer peripheral zone is smaller than that of each of said fuel rods disposed in said central zone, and the diameter of each of said fuel rods among those disposed in said outer peripheral zone which is disposed adjacent to said control rod is smaller thah that of fuel rods that are disposed in the other portion of said outer peripheral zone.

6.　　　A fuel assembly for a pressurized water reactor, adapted to be loaded in the core of said reactor, said fuel assembly incorporating therein a plurality of control rod guide pipes each accommodating a control rod, said fuel assembly having a longitudinal axis along which said control rod guide pipes are disposed and an outer peripheral zone surrounding said longitudinal axis, said fuel assembly comprising a plurality of fuel rods extending along said longitudinal axis, said plurality of fuel rods including at least two types of fuel rods, comprising at least a set of fuel rods having a large diameter and another set of fuel rods having a small diameter, wherein said small-siameter fuel rods are arrayed in said outer peripheral zone of said fuel assembly and in the vicinity of a position adjacent to said control guide pipes.

FIG. 1

FIG. 2

FIG. 3

# FIG. 4

## FIG. 5

## FIG. 6

# FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 252 674 (SOCIETE NAT.D'ETUDE ET CONSTRUCTION DE MOTEURS D'AVIATION) <br> * Page 2, right-hand column, lines 3-17; figures 5,6 * | 1,2 | G 21 C 7/00 <br> G 21 C 3/32 |
| D,A | US-A-3 132 076 (J.M. WEST et al.) <br> * Column 3, line 71 - column 4, line 9; figure 5 * | 1-3 | |
| A | US-A-3 344 036 (R.J. HASLAM et al.) <br> * Column 3, lines 3-12; figures 2,6 * | 1-4 | |
| A | EP-A-0 094 255 (WESTINGHOUSE) <br> * Claim 1; figures 5,6 * | 5,6 | **TECHNICAL FIELDS SEARCHED (Int. Cl.4)** <br><br> G 21 C 7/00 <br> G 21 C 3/00 <br> G 21 C 1/00 |

The present search report has been drawn up for all claims

| Place of search | Date of completion of the search | Examiner |
|---|---|---|
| THE HAGUE | 19-06-1986 | ERRANI C. |